# EUROPEAN PATENT APPLICATION

(11) **EP 1 269 839 A2**
(43) Date of publication of application: **02.01.2003**
(21) Application number: 02425083.9
(22) Date of filing: 19.02.2002
(51) Int. Cl.: A01K 97/12

(54) **Signaller of bite for fishing rod**

(30) Priority: 01.03.2001 IT AP000002 U
(71) Applicant: O.M.C. di Federici Stefano, 63037 San Benedetto del Tronto (AP) (IT)
(72) Inventor: O.M.C. di Federici Stefano, 63037 San Benedetto del Tronto (AP) (IT)

(57) **Abstract**

The present invention pertains to a signaller of by to fix on the tip of the fishing reed.

The equipment in word includes of a container to whose inside is found a circumferentor of vibrations and an electric
accumulator, propagating to the outside a bright-acoustic signal, to the presence of vibration of the tip of the fishing reed.

## Description

### Deposited the TEXT OF THE DESCRIPTION

The present question of European Brevet is for a signaller of by to fix to the tip of a fishing reed. This device has been realized for resolving the problem related to the percepimento of the of the bait from the fish. Especially in the fishing to fondo,o in the bolentino it resulted particularly difficult to individualize the first approaches that the fish had with the bait as her traction of the fishing-line is least and fast and more' whether to transmit an ample oscillation to the tip of the reed, easily visible and rilevabile, a dwarfish vibration of the medesimo,soprattutto results when the bait is attached by small fishes, that not being able of to swallow her/it, limits him to eat her/it to bits up to the total divorazione.

Mostly difficult to perceive at night such signals in presence of wind or with the waves, that inflict a continuous irregular movement to the tip.
Besides this problem forced the fisherman to have to bring more or less fishing reeds robuste,da to use in base to the present meteorological conditions on the place of pesca,cercando to use that reed with the thinnest tip for to be able I sharpen to perceive of it and to appraise its movement, to damage of the numerous advantages that you/they are had with a strong reed, what the distance of the lancio,lenza of greater diameter, smaller difficulties in the recovery of great fishes etc....

The sitemis currently in use what metallic bells, chemical fialette luminose,sensori of survey traction and vibration of the fishing-line etc.. they show him, particularly under adverse meteorological conditions, inaffidabili above all to signal the small fishes divoratori,tanto that is usual to withdraw the fishing-line and to acknowledge out once only the water of the total disappearance of the bait.

On the base of such considerations you/he/she has been conceived our device that understands of a container of small dimensions to anchor to the tip of the pesca,è reed composed by a circumferentor of vibrations regolabile,un accumulator elettrico,e a bright and acoustic external diffuser that is automatically activated to the perception of the least vibration of the tip of the same reed.

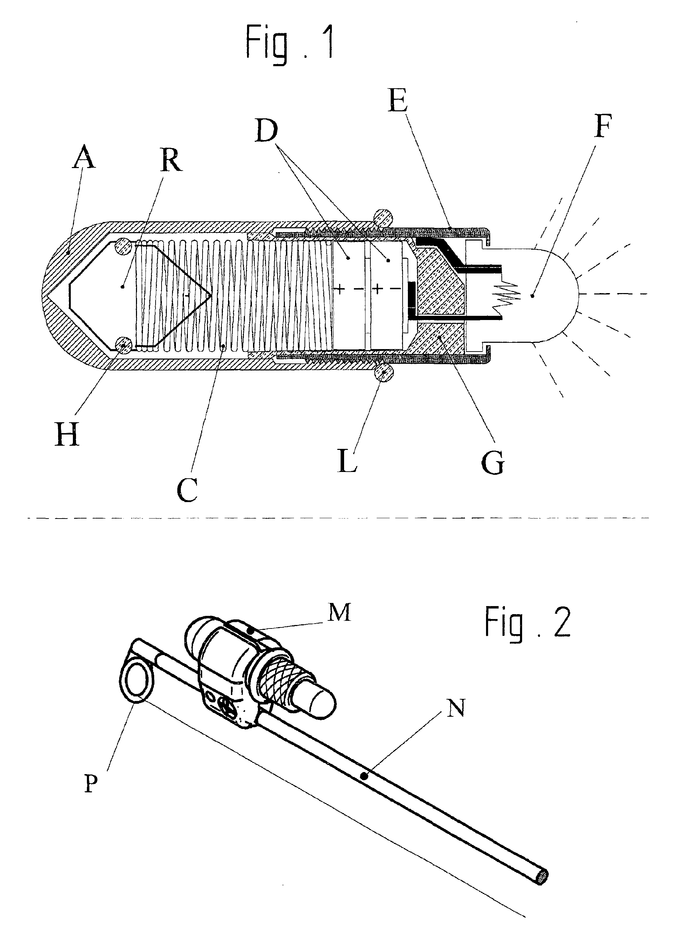

You realizes therefore the convenience of such tool that signals, also of reflex, to the fisherman also the intent of the fish to bite the bait allowing to give her/it for him "ferrata"prima that the fish acknowledges the presence of the hook and rejections the bait or that I/you/he/she succeed in simply unthreading her/it from the hook. Besides the fisherman is able to appraise when you/he/she is the case to put again the bait in how much you/he/she is also told some attacks suffered by the small fishes. For greater explanatory clarity the description of the found one continues with reference to the table of sketch attached, avente alone illustrative value and not certain limitativo,in which the Figure 1 are a representation partly sectioned of the model in word and the Figure 2 it illustrates the position assumed with the relative support (M) on the tip (N). With reference to the table of sketch allegata,il model in word is realized with material conductors, it consists in a small container (A) with the inside hole partly filleted and terminante to form of cone that constitutes the electric contact fisso, all I intern the circumferentor (R) assembled to the rubber band (C) it constitutes the electric contact in general mobile, dal opposed of the rubber band (B) you/they are inserted some accumulators of electric energy (D), isolated electrically from the plastic detail (G) in the knob of regulation filettato(E), externally the diffuser is found (F) with the relative poles + and - to contact both with (D) that with (E). In the described model rotating the knob (E) he increases or it decreases the distance among the contacts (A) and (R) influencing on the sensibility of the trovato,inoltre is found you a circular gasket (L) so that to waterproof and a further ring in insulating material (H) that to a greater distance among (A) and (R) island electrically the contacts and it avoids the superfluous operation of it. For greater clarity: the fish intent to bite repeatedly puts in traction the fishing-line (P) that in turn it produces to the tip of the fishing reed a vibration which makes to touch particularly repeatedly (R) against the particular one (A) closing the electric circuit and making to flash (F). even if in the attached figure it is illustrated a device circumferentor of vibrations type mechanic adjustable nothing obsolete to endow says device of similar circumferentor of vibrations of electronic nature, liquid etc.. As to foresee an acoustic-bright diffuser or singly, or emitter of so that electromagnetic receivable from a distance centralina.

## Claims

1. Signaller of by to apply on the tip of the fishing reed, **characterized by** the fact to understand a circumferentor of vibrations (R), connected electrically to an electric accumulator (D) and to an external signaller (F).

2. Signaller of for fishing reed described in the claim 1 **characterized by** to possess an external diffuser (F) with alone propagation of bright signal.

3. Signaller of for fishing reed described in the claim 1 **characterized by** to possess an external diffuser (F) with alone propagation of sonorous signal.

4. Signaller of for fishing reed described in the claim 1 **characterized by** to possess an external diffuser (F) with alone propagation of signal with so that electromagnetic.

5. Signaller of for fishing reed described in the claim 1 **characterized by** to possess a circumferentor of vibration (R) of liquid nature.

6. Signaller of for fishing reed described in the claim 1 **characterized by** to possess a circumferentor of vibration (R) of electronic nature.

7. Signaller of for fishing reed described in the claim 1 **characterized by** to possess a circumferentor of vibration (R) of liquid nature.

8. Signaller of for fishing reed described in the claim 1 **characterized by** to possess an accumulator of energy (D) photoelectric.
